# EUROPEAN PATENT SPECIFICATION

(11) **EP 3 102 340 B1**
(45) Date of publication and mention of the grant of the patent: **24.10.2018**
(21) Application number: 15702264.1
(22) Date of filing: 03.02.2015
(51) Int. Cl.: B05D 3/02, C03C 17/32, C03C 17/36, C03C 17/38, F26B 3/28, F26B 3/30, F26B 15/04

(54) **METHOD TO DRY OR CURE AN ORGANIC COATING ON A GLASS PLATE**
VERFAHREN ZUM TROCKNEN ODER HÄRTEN EINER ORGANISCHEN BESCHICHTUNG AUF EINER GLASPLATTE
PROCÉDÉ POUR SÉCHER OU DURCIR UN REVÊTEMENT ORGANIQUE SUR UNE PLAQUE DE VERRE

(30) Priority: 05.02.2014 EP 14290027
(43) Date of publication of application: 14.12.2016
(73) Proprietor: Solaronics S.A., 59280 Armentières (FR)
(72) Inventor: BASTIEN, Christophe, 59320 Haubourdin (FR)
(74) Representative: Vangheluwe, Lieven Germain L.
(86) International application number: PCT/EP2015/052102
(87) International publication number: WO 2015/117927

(56) References cited:
- GB-A- 2 411 607
- US-A- 4 594 266
- US-A1- 2009 226 637

## Description

### Technical Field

The invention relates to a method for drying and/or curing an organic coating layer on a non-transparent coating layer on a glass plate. The method of the invention can advantageously be used in the production of mirror glass.

### Background Art

In the production of mirror glass, a glass plate is coated with a non-transparent coating. The non-transparent coating is mostly silver or comprises silver. To protect the non-transparent layer, a wet organic coating composition - water or solvent based - is applied onto the non-transparent layer. The applied wet organic coating layer is dried and cured in order to form an organic polymer coating layer. The organic polymer coating layer is for instance an epoxy layer comprising a number of additives, e.g. organic or inorganic pigments. The wet organic coating composition can also comprise additives such as curing agents. Examples of coating compositions are given in EP2474583A1.

It is known in mirror glass production to dry and cure the organic polymer coating by means of a continuous oven in which radiation emitters are installed on the side of the mirror glass that contains the organic coating layer.

US4594266A describes a process and an apparatus for baking an organic coating which has been applied to a glass plate. The organic coating is baked in a continuous furnace, in an inert atmosphere by means of infrared radiation of short-wavelength generated by infrared emitters installed at the coated side of the glass plate. The organic coatings are heated in such a penetrating manner by the infrared radiation that they are baked at the glass substrate/coating interface preventing the formation of swellings in the coating layer. Relevant processes are also described in GB 2 411 607 A and US 2009/0226637 A1.

### Disclosure of Invention

The primary objective of the invention is to provide a method to dry and/or cure with high power density organic coating layers on a non-transparent coating layer on a glass plate without the occurrence of cracks or breakage of the glass plate, especially when using lower glass quality.

The first aspect of the invention is a method for drying and/or curing an organic coating layer on a glass plate thereby forming a dried or cured organic polymer coating layer on the glass plate, e.g. thereby producing mirror glass. The glass plate comprises a non-transparent coating layer. The organic coating layer is applied on the side of the glass plate comprising the non-transparent coating layer. The non-transparent coating can e.g. be previously applied. The non-transparent coating can e.g. cover the full surface of the glass plate. The non-transparent coating layer can e.g. be a silver layer and/or a metallic layer, e.g. a metallic layer comprising silver. The method comprises the step of transporting the glass plate through a drying and/or curing oven. The drying and/or curing oven can preferably be a continuous oven. The drying or curing oven comprises a heating system. The heating system comprises one or more radiation emitters on the side of the glass plate opposite to the side with the organic coating layer. The radiation emitters are used to heat the side of the glass plate opposite to the side with the organic coating layer in order to dry and/or cure the organic coating layer on the glass plate so as to form a dried or cured organic polymer coating layer on the glass plate. The non-transparent coating layer is located between the glass plate and the dried or cured polymer coating layer.

Surprisingly, the use of the radiation emitters on the side of the glass plate opposite to the side with the organic coating layer resulted in excellent results in terms of drying and/or curing of the coating layer, even when using low quality glass, preventing the occurrence of cracks or breakage of the glass plate. The results were surprising, as it was expected that the non-transparent coating layer would act as a heat separator which would not allow drying and/or curing the organic coating layer.

Preferably, the organic polymer coating layer comprises an organic resin, e.g. a thermosetting resin (e.g. an epoxy, alkyd, phenol, melamine or acrylic resin) or an organic binder. The organic polymer coating layer can be a cross-linked, a thermoset or a thermoplastic polymer coating layer. The coating recipe can comprise, next to the organic resin or organic binder, also pigments, curing agents, dispersants, thickening agents and other additives, in water or in an organic solvent, or in a combination of water and an organic solvent (e.g. an aromatic or aliphatic hydrocarbon, an ester, an ether, a ketone or an alcohol; or mixtures of different organic solvents).

Preferably, the radiation emitters are gas fired radiation emitters. Preferably, the gas fired radiation emitters have a power density of at least 175 kW/m², more preferably of at least 250 kW/m², even more preferably of at least 300 kW/m², even more preferably of at least 350 kW/m².

The power density is defined as the radiation power (in kW) per unit of surface area of the radiation emitters. This preferred embodiment of the invention allows a fast drying and/or curing while preventing the occurrence of cracks in the glass panel during the drying and/or curing process. In prior art systems, the use of high power density drying or curing systems was not possible as it increased the risk of occurrence of cracks in the glass panel during drying and/or curing.

In a preferred embodiment, the radiation emitters are electrical radiation emitters. In an example, the electrical radiation emitters are using 4 kW lamps.

In a preferred method, the heating system comprises in addition to the radiation emitters, means for convective heating to heat the side of the glass plate opposite to the side with the organic coating layer. Preferably, the means for convective heating are means that blow hot gas onto the side of the glass plate opposite to the side with the organic coating layer. The hot gas can e.g. be sucked away from in the drying oven, in order to blow it back onto the side of the glass plate opposite to the side with the organic coating layer. Such a method increases the efficiency of the infrared emitting drying and/or curing system.

In a preferred method, the heating system comprises rows of radiation emitters positioned across the width of the continuous drying or curing oven; and in between rows, suction systems across the width of the drying or curing oven evacuating hot gasses from at the glass plate. Preferably, the heating system also comprise blowing systems across the width of the drying or curing oven blowing back at least part of the evacuated hot gasses to the side of the glass plate opposite to the side with the organic coating layer.

Preferably, the organic coating layer is water based or is an organic solvent or the solvent used for the organic coating is a combination of water and organic solvent.

Preferably, in the oven, the temperature of the glass plate does not exceed 350 °C, more preferably does not exceed 250 °C, and even more preferably does not exceed 200 °C. The temperature of the organic coating layer during drying and/or curing can be measured by means of a pyrometer.

In a preferred method, the drying and/or curing oven does not comprise infrared emitters at the side of the glass plate provided with the organic coating layer.

In a preferred method, the drying and/or curing oven does not comprise a heating system applying heat to the side of the glass plate provided with the organic coating layer.

In a preferred method, the drying and/or curing oven comprises a second heating system, installed at the side of the glass plate provided with the organic coating layer, to heat the side of the glass plate provided with the organic coating layer. Preferably, the second heating system comprises infrared emitters and/or convective heating systems.

In an embodiment of the invention, convective heating of the side of the glass plate provided with the organic coating layer is performed by means of blowing - via appropriate blowing means - hot gas onto the side of the glass plate provided with the organic coating. This hot gas can e.g. be sucked from in the oven itself, e.g. from at the side of the glass plate opposite to the side with the organic coating layer.

In an embodiment of the invention, the non-transparent coating layer is a reflective coating, e.g. comprising metallic silver.

In an embodiment of the invention, the organic polymer coating layer is a protective layer to protect the underlying non-transparent coating layer. In a preferred embodiment, the organic polymer coating layer covers the full surface of the non-transparent coating layer.

Preferably, the glass plate has a thickness, without coating layers, of between 2 and 6 mm.

Preferably, the organic polymer coating layer is a uniform coating layer over the glass plate.

Preferably, the organic polymer coating layer is applied as a wet coating layer.

Preferably, the non-transparent coating layer is a uniform non-transparent coating layer over the glass plate.

Preferably, the method is performed at a temperature so that no thermal treatment is performed on the glass plate. With no thermal treatment is meant that no tempering and no toughening treatment are performed by the heating system.

In an embodiment of the method, the side of the glass plate opposite to the non-transparent coating layer does not comprise a wet coating layer.

Preferably, the film thickness of the polymer coating layer after drying and curing is between 30 and 100 µm.

A second aspect of the invention is a method of processing a glass plate into a mirror, wherein a method is used as in the first aspect of the invention. The method has the benefit that high quality mirrors can be made, even when using glass plates of low quality.

### Brief Description of the Drawings

Figure 1 shows an example of a glass plate with a cured organic polymer coating layer as can be made by the method of the invention.
Figure 2 shows a continuous coating and drying/curing production line that can be used in the invention.
Figure 3 shows an alternative continuous coating and drying/curing production line that can be used in the invention.

### Mode(s) for Carrying Out the Invention

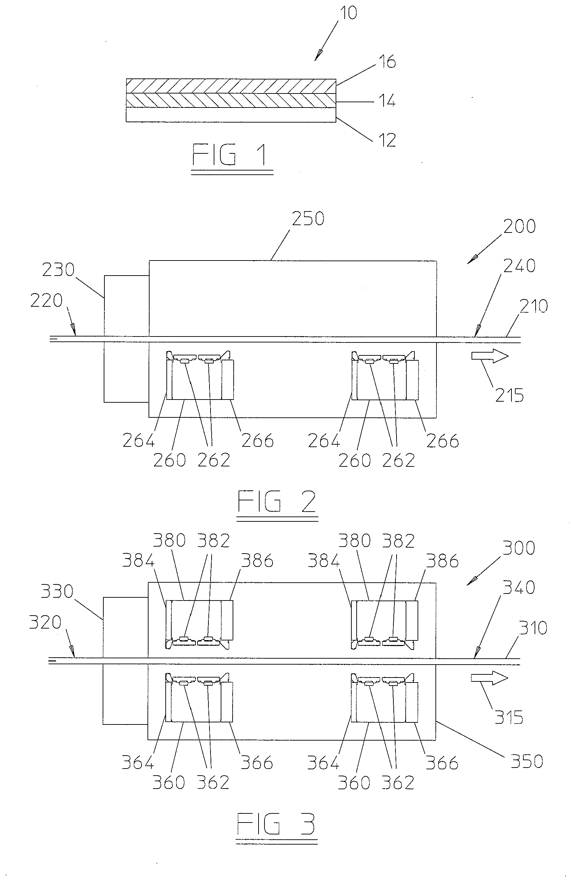

Figure 1 shows an example of glass plate 10 with a cured organic polymer coating layer as can be made by the method of the invention. A glass plate 12 comprises a non-transparent coating layer 14, e.g. a silver layer. On top of the non-transparent coating layer 14, a cured organic polymer coating layer 16 is present.

Figure 2 shows a continuous coating and drying/curing production line 200 that can be used in the invention. A glass plate 210 is continuously moved through the production line 200 in the direction of arrow 215. On one of its sides (the side indicated by 220), the glass plate comprises a metallic non-transparent coating. The production line 200 comprises a coating station 230, for applying a wet coating layer onto the non-transparent coating layer. The production line 200 comprises a continuous oven 250, comprising a series of heating systems 260 installed on the side of the glass plate 210 opposite to the side 240 with the organic coating layer. The heating systems 260 comprise infrared emitters 262. The heating systems 260 can comprise means to evacuate hot gas from at the surface of the glass plate, and means to blow the hot gas back to the glass plate, thereby increasing the efficiency of the infrared emitters. Such system can e.g. be provided by installing suction nozzles 264 and by installing blowing nozzles 266, e.g. across the width of the production line 200 at the sides of rows of infrared emitters installed across the width of the production line 200.

Figure 3 shows an alternative continuous coating and drying/curing production line 300 that can be used in the invention. A glass plate 310 is continuously moved through the production line 300 in the direction of arrow 315. On one of its sides (the side indicated by 320), the glass plate comprises a metallic non-transparent coating. The production line 300 comprises a coating station 330, for applying a wet coating layer onto the non-transparent coating layer. The production line 300 comprises a continuous oven 350, comprising a series of heating systems 360 installed on the side of the glass plate 310 opposite to the side 340 with the organic coating layer. The heating systems 360 comprise infrared emitters 362. The heating systems 360 can comprise means to evacuate hot gas from at the surface of the glass plate, and means to blow the hot gas back to the glass plate, thereby increasing the efficiency of the infrared emitters. Such system can e.g. be provided by installing suction nozzles 364 and by installing blowing nozzles 366, e.g. across the width of the production line 300 at the sides of rows of infrared emitters installed across the width of the production line 300.

The production line 300 additionally comprises a series of heating systems 380 installed on the side 340 of the glass plate 310 comprising the organic coating layer. The heating systems 380 comprise infrared emitters 382. The heating systems 380 can comprise means to evacuate hot gas from at the surface of the glass plate, and means to blow the hot gas back to the glass plate, thereby increasing the efficiency of the infrared emitters. Such system can e.g. be provided by installing suction nozzles 384 and by installing blowing nozzles 386, e.g. across the width of the production line 300 at the sides of rows of infrared emitters installed across the width of the production line 300.

Trials have been done in a continuous oven comprising rows of gas fired radiation emitters at both sides of the plate that is lead through the oven. The oven contained rows of such emitters. In between the rows of gas fired radiation emitters suction nozzles are provided to evacuate hot gasses.

Glass plate of dimensions 300 mm by 400 mm and a glass thickness of 3 mm have been led through the oven. The glass plate has on top of it a reflective non-transparent silver coating. On top of the reflective coating, a wet organic coating had been applied.

An example of a wet organic coating that can be used in the invention is a coating comprising methyl isobutyl ketone (MIBK) as a solvent (an alternative solvent can be used as well), e.g. 20% by weight of the wet coating composition, epoxy resin (but alternative resins can be used as well), e.g. 25% by weight, dispersing agents, curing accelerators and pigments. As pigments, anti-corrosive pigments can be used (e.g. zinc calcium cyan amide, e.g. 15% by weight), talc and or barium sulphate (e.g. 15 - 30% by weight) and colouring pigments to provide the coating layer with the desired colour.

Such an organic coating layer was applied onto the reflective non-transparent silver coating of the glass plate, in order to achieve an organic coating layer of 42 µm thickness after drying and curing. This coating layer is a protective coating layer used in the production of mirrors.

Trials have been performed in the oven using the gas fired radiation emitters at a power density 262 kW/m², via tuning them with an appropriate gas supply.

A first trial was performed using only the gas fired radiation emitters at the side of the wet organic coating of the glass plate.

A second trial was performed using only the gas fired radiation emitters at the opposite side of the wet organic coating side of the glass plate.

In both trials the temperature of the glass plate, and of the organic coating layer, stayed below 220 °C, as was measured with a pyrometer. The test oven had a length of 400 mm and the speed of transport through the oven was 2.5 m/min. In both trials, the residence time of the glass plate in the oven was 10 seconds. In both trials, the organic coating layer was properly dried and cured.

Visual comparison of the glass plates dried and cured in both trials showed the difference in quality between both trials. Glass plates of the second trial showed much better quality. Glass plate made in the first trial showed larger bending. Such bending is known as providing a high risk for cracks or breaks in the glass when using low quality glass plates.

In the same way as with wet coatings using organic solvents, water based coating layers can be applied and dried and/or cured using the invention.

## Claims

1. Method for drying and/or curing an organic coating layer on a glass plate thereby forming a dried or cured organic polymer coating layer on the glass plate;
wherein the glass plate comprises a non-transparent coating layer;
wherein the organic coating layer is applied on the side of the glass plate comprising the non-transparent coating layer;
wherein the non-transparent coating layer is located between the glass plate and the dried or cured polymer coating layer;
the method comprises the step of transporting the glass plate through a drying and/or curing oven;
wherein the drying or curing oven comprises a heating system;
wherein the heating system comprises one or more radiation emitters on the side of the glass plate opposite to the side with the organic coating layer;
wherein the radiation emitters are used to heat the side of the glass plate opposite to the side with the organic coating layer in order to dry and/or cure the organic coating layer on the glass plate so as to form a dried or cured organic polymer coating layer on the glass plate.

2. Method as in claim 1, wherein the radiation emitters are gas fired radiation emitters.

3. Method as in claim 2, wherein the gas fired radiation emitters have a power density of at least 175 kW/m².

4. Method as in claim 1, wherein the radiation emitters are electrical radiation emitters.

5. Method as in any of the preceding claims, wherein the heating system comprises in addition to the radiation emitters, means for convective heating to heat the side of the glass plate opposite to the side with the organic coating layer.

6. Method as in any of the preceding claims, wherein the heating system comprises rows of radiation emitters positioned across the width of the continuous drying or curing oven, and in between the rows suction systems across the width of the drying or curing oven evacuating hot gasses from at the glass plate.

7. Method as in any of the preceding claims, wherein the organic coating layer is water based or is solvent based or wherein the solvent used for the coating is a combination of water and solvent.

8. Method as in any of the preceding claims, wherein in the oven, the temperature of the glass plate does not exceed 350 °C.

9. Method as in any of the preceding claims, wherein the drying and/or curing oven does not comprise infrared emitters applying heat to the side of the glass plate provided with the organic coating layer.

10. Method as in any of the preceding claims, wherein the drying and/or curing oven does not comprise a heating system installed at the side of the glass plate provided with the organic coating layer.

11. Method as in claims 1 to 8, wherein the drying and/or curing oven comprises a second heating system, installed at the side of the glass plate provided with the organic coating layer, to heat the side of the glass plate provided with the organic coating layer.

12. Method as in claim 11, wherein the second heating system comprises infrared emitters and/or convective heating systems.

13. Method as in any of the preceding claims, wherein the non-transparent coating layer is a reflective coating; preferably comprising metallic silver.

14. Method as in any of the preceding claims, wherein the organic polymer coating layer is a protective layer to protect the underlying non-transparent coating layer.

15. Method for processing a glass plate into a mirror, wherein a method as in any of the previous claims is used for drying and/or curing an organic coating layer on a glass plate.

## Patentansprüche

1. Verfahren zum Trocknen und/oder Härten einer organischen Beschichtungsschicht auf einer Glasplatte, um eine getrocknete oder gehärtete organische Polymerbeschichtungsschicht auf der Glasplatte zu bilden;
wobei die Glasplatte eine nichttransparente Beschichtungsschicht umfasst;
wobei die organische Beschichtungsschicht auf der Seite der Glasplatte aufgebracht wird, die die nichttransparente Beschichtungsschicht umfasst;
wobei die nichttransparente Beschichtungsschicht zwischen der Glasplatte und der getrockneten oder gehärteten Polymerbeschichtungsschicht angeordnet ist;
wobei das Verfahren den Schritt des Beförderns der Glasplatte durch einen Trocknungs- und/oder Härtungsofen umfasst;
wobei der Trocknungs- oder Härtungsofen ein Heizsystem umfasst;
wobei das Heizsystem einen oder mehrere Strahlungsemitter an der Seite der Glasplatte, die der Seite mit der organischen Beschichtungsschicht gegenüberliegt, umfasst;
wobei die Strahlungsemitter zum Heizen der Seite der Glasplatte, die der Seite mit der organischen Beschichtungsschicht gegenüberliegt, verwendet werden, um die organische Beschichtungsschicht auf der Glasplatte zu trocknen und/oder zu härten, um eine getrocknete oder gehärtete organische Polymerbeschichtungsschicht auf der Glasplatte zu bilden.

2. Verfahren gemäß Anspruch 1, wobei die Strahlungsemitter gasbefeuerte Strahlungsemitter sind.

3. Verfahren gemäß Anspruch 2, wobei die gasbefeuerten Strahlungsemitter eine Leistungsdichte von wenigstens 175 kW/m² aufweisen.

4. Verfahren gemäß Anspruch 1, wobei die Strahlungsemitter elektrische Strahlungsemitter sind.

5. Verfahren gemäß einem der vorstehenden Ansprüche, wobei das Heizsystem zusätzlich zu den Strahlungsemittern Einrichtungen zum Konvektionsheizen zum Heizen der Seite der Glasplatte, die der Seite mit der organischen Beschichtungsschicht gegenüberliegt, umfasst.

6. Verfahren gemäß einem der vorstehenden Ansprüche, wobei das Heizsystem Reihen von Strahlungsemittern, die quer zu der Breite des kontinuierlichen Trocknungs- oder Härtungsofens angeordnet sind, und zwischen den Reihen Absaugsysteme quer zu der Breite des Trocknungs- oder Härtungsofens zum Absaugen heißer Gase von der Glasplatte umfasst.

7. Verfahren gemäß einem der vorstehenden Ansprüche, wobei die organische Beschichtungsschicht auf Wasser basiert oder auf Lösungsmittel basiert oder wobei das für die Beschichtung verwendete Lösungsmittel eine Kombination von Wasser und Lösungsmittel ist.

8. Verfahren gemäß einem der vorstehenden Ansprüche, wobei in dem Ofen die Temperatur der Glasplatte 350 °C nicht übersteigt.

9. Verfahren gemäß einem der vorstehenden Ansprüche, wobei der Trocknungs- und/oder Härtungsofen keine Infrarotemitter umfasst, die Wärme auf die Seite der Glasplatte, die mit der organischen Beschichtungsschicht versehen ist, aufbringen.

10. Verfahren gemäß einem der vorstehenden Ansprüche, wobei der Trocknungs- und/oder Härtungsofen kein Heizsystem umfasst, das an der Seite der Glasplatte, die mit der organischen Beschichtungsschicht versehen ist, eingerichtet ist.

11. Verfahren gemäß Ansprüchen 1 bis 8, wobei der Trocknungs- und/oder Härtungsofen ein zweites Heizsystem umfasst, das an der Seite der Glasplatte, die mit der organischen Beschichtungsschicht versehen ist, eingerichtet ist, um die Seite der Glasplatte, die mit der organischen Beschichtungsschicht versehen ist, zu heizen.

12. Verfahren gemäß Anspruch 11, wobei das zweite Heizsystem Infrarotemitter und/oder Konvektionsheizsysteme umfasst.

13. Verfahren gemäß einem der vorstehenden Ansprüche, wobei die nichttransparente Beschichtungsschicht eine reflektierende Beschichtung ist; vorzugsweise umfassend metallisches Silber.

14. Verfahren gemäß einem der vorstehenden Ansprüche, wobei die organische Polymerbeschichtungsschicht eine Schutzschicht zum Schützen der darunterliegenden nichttransparenten Beschichtungsschicht ist.

15. Verfahren zum Verarbeiten einer Glasplatte zu einem Spiegel, wobei ein Verfahren gemäß einem der vorstehenden Ansprüche zum Trocknen und/oder Härten einer organischen Beschichtungsschicht auf einer Glasplatte verwendet wird.

## Revendications

1. Procédé de séchage et/ou de durcissement d'une couche de revêtement organique sur une plaque de verre, en formant ainsi une couche de revêtement polymère organique séchée ou durcie sur la plaque de verre ;
dans lequel la plaque de verre comprend une couche de revêtement non transparente ;
dans lequel la couche de revêtement organique est appliquée sur le côté de la plaque de verre comprenant la couche de revêtement non transparente ;
dans lequel la couche de revêtement non transparente est située entre la plaque de verre et la couche de revêtement polymère séchée ou durcie ;
le procédé comprend l'étape de transport de la plaque de verre à travers un four de séchage et/ou de durcissement ;
dans lequel le four de séchage ou de durcissement comprend un système de chauffage ;
dans lequel le système de chauffage comprend un ou plusieurs émetteurs de rayonnement sur le côté de la plaque de verre opposé au côté comprenant la couche de revêtement organique ;
dans lequel les émetteurs de rayonnement sont utilisés pour chauffer le côté de la plaque de verre opposé au côté comprenant la couche de revêtement organique pour sécher et/ou durcir la couche de revêtement organique sur la plaque de verre afin de former une couche de revêtement polymère organique séchée ou durcie sur la plaque de verre.

2. Procédé selon la revendication 1, dans lequel les émetteurs de rayonnement sont des émetteurs de rayonnement au gaz.

3. Procédé selon la revendication 2, dans lequel les émetteurs de rayonnement au gaz ont une densité de puissance d'au moins 175 kW/m².

4. Procédé selon la revendication 1, dans lequel les émetteurs de rayonnement sont des émetteurs de rayonnement électriques.

5. Procédé selon l'une quelconque des revendications précédentes, dans lequel le système de chauffage comprend, en plus des émetteurs de rayonnement, des moyens de chauffage par convection pour chauffer le côté de la plaque de verre opposé au côté comprenant la couche de revêtement organique.

6. Procédé selon l'une quelconque des revendications précédentes, dans lequel le système de chauffage comprend des rangées d'émetteurs de rayonnement positionnées à travers la largeur du four de séchage ou de durcissement en continu et, entre les rangées, des systèmes d'aspiration à travers la largeur du four de séchage ou de durcissement, évacuant les gaz chauds à partir de la plaque de verre.

7. Procédé selon l'une quelconque des revendications précédentes, dans lequel la couche de revêtement organique est à base d'eau ou est à base de solvant, ou dans lequel le solvant utilisé pour le revêtement est une combinaison d'eau et de solvant.

8. Procédé selon l'une quelconque des revendications précédentes, dans lequel, dans le four, la température de la plaque de verre ne dépasse pas 350 °C.

9. Procédé selon l'une quelconque des revendications précédentes, dans lequel le four de séchage et/ou de durcissement ne comprend pas d'émetteurs infrarouges appliquant de la chaleur sur le côté de la plaque de verre pourvu de la couche de revêtement organique.

10. Procédé selon l'une quelconque des revendications précédentes, dans lequel le four de séchage et/ou de durcissement ne comprend pas de système de chauffage installé sur le côté de la plaque de verre pourvu de la couche de revêtement organique.

11. Procédé selon les revendications 1 à 8, dans lequel le four de séchage et/ou de durcissement comprend un deuxième système de chauffage, installé sur le côté de la plaque de verre pourvu de la couche de revêtement organique, pour chauffer le côté de la plaque de verre pourvu de la couche de revêtement organique.

12. Procédé selon la revendication 11, dans lequel le deuxième système de chauffage comprend des émetteurs infrarouges et/ou des systèmes de chauffage par convection.

13. Procédé selon l'une quelconque des revendications précédentes, dans lequel la couche de revêtement non transparente est un revêtement réfléchissant, comprenant préférablement de l'argent métallique.

14. Procédé selon l'une quelconque des revendications précédentes, dans lequel la couche de revêtement polymère organique est une couche protectrice qui sert à protéger la couche de revêtement non transparente sous-jacente.

15. Procédé de transformation d'une plaque de verre pour en faire un miroir, dans lequel un procédé selon l'une quelconque des revendications précédentes est utilisé pour le séchage et/ou le durcissement d'une couche de revêtement organique sur une plaque de verre.
